# FASCICULE DE BREVET EUROPEEN

(11) **EP 1 800 725 B1**
(45) Date de publication et mention de la délivrance du brevet: **17.08.2016**
(21) Numéro de dépôt: 06291980.8
(22) Date de dépôt: 19.12.2006
(51) Int. Cl.: B01D 3/20

(54) **ENCEINTE DE TRAITEMENT D'HYDROCARBURES COMPRENANT UN ORGANE DE DÉVERSEMENT**
BEHANDLUNGSKAMMER FÜR KOHLENSTOFFEN MIT EINER ÜBERLAUFVORRICHTUNG
CHAMBER FOR HYDROCARBONS TREATMENT CONTAINING AN ELEMENT FOR DRAINING

(30) Priorité: 22.12.2005 FR 0513153
(43) Date de publication de la demande: 27.06.2007
(73) Titulaire: Total Raffinage France, 92400 Courbevoie (FR)
(72) Inventeur: Delatour, Romain, 76600 Le Havre (FR)
(74) Mandataire: Largeau, Béatrice

(56) Documents cités:
- WO-A2-01/60481
- DE-C- 764 103
- US-A- 4 226 678
- US-A- 5 535 989
- US-A- 6 053 484
- US-A- 6 076 813
- US-B1- 6 390 454

## Description

L'invention concerne une enceinte de traitement pourvue d'un organe de déversement destiné à une enceinte de traitement abritant un écoulement gaz-liquide, usuellement qualifié de contre-courant naturel, à savoir à flux gazeux ascendant et flux liquide descendant.

L'organe de déversement selon l'invention est plus particulièrement destiné aux enceintes de traitement d'hydrocarbures, telles que des colonnes de distillation atmosphérique, de distillation sous vide, de fractionnement atmosphérique ou sous vide de viscoréducteur, sans toutefois s'y limiter.

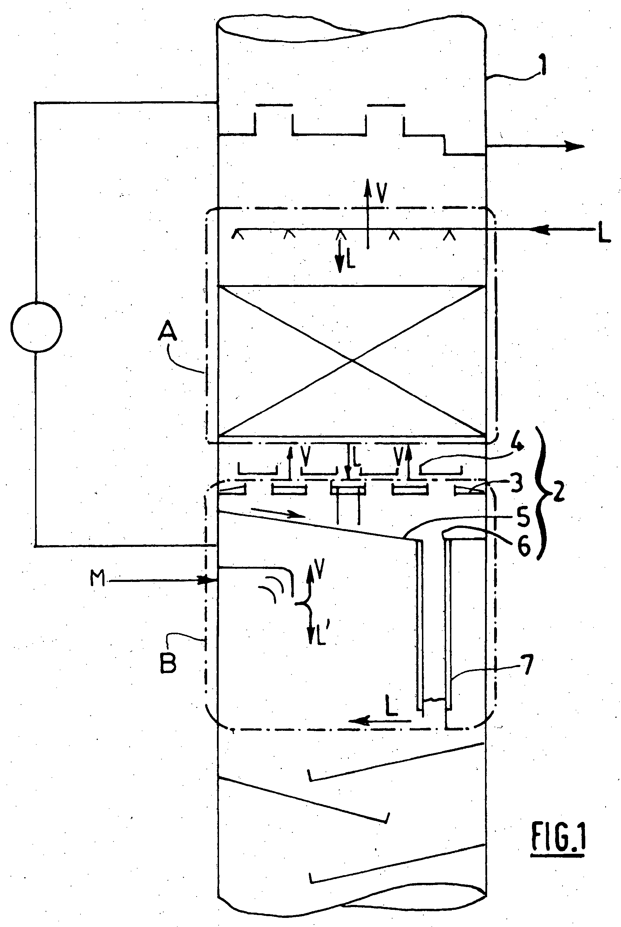

Une colonne de ce type est représentée de manière conventionnelle sur la figure 1. Elle comprend une enceinte 1 comprenant une zone de lavage A au niveau de laquelle un flux liquide L de lavage est introduit. En dessous de la zone de lavage A, se trouve une zone d'overflash B, au niveau de laquelle on introduit un mélange diphasique M constitué de gaz et de liquide qui se sépare en un flux gazeux V ascendant et une phase liquide L' s'écoulant par gravité vers la zone inférieure de l'enceinte. Cette zone d'overflash B est pourvue d'un organe de déversement 2 formé d'un plateau collecteur 3 sensiblement horizontal comprenant des ouvertures 4 pour le passage du flux gazeux V ascendant et du flux liquide L descendant. L'organe de déversement comprend également une goulotte 5 de récupération du flux liquide L descendant présentant à cet effet une légère inclinaison par rapport au plateau. La goulotte 5 débouche sur un orifice de déversement 6 permettant l'écoulement du flux liquide L descendant vers la partie inférieure de la colonne. Cet orifice de déversement 6 est habituellement relié à une tubulure 7 sensiblement verticale (tubulure de soutirage du flux liquide), à l'intérieur de laquelle s'écoule le flux liquide L. Le plateau collecteur est pourvu soit d'une seule goulotte, soit de plusieurs goulottes, chacune débouchant sur un seul orifice. Les parois de la tubulure 7 étant chauffées par le flux gazeux ascendant, le flux liquide de soutirage, s'écoulant à l'intérieur de la tubulure en couche mince sur ses parois internes depuis l'organe de déversement 2, est soumis à une température élevée pendant un temps de contact qui peut être d'autant plus important que la vitesse d'écoulement est faible, ce qui provoque la formation de coke sur les parois par craquage thermique du liquide en écoulement. L'accumulation du coke sur les parois internes de la tubulure 7 crée une obstruction croissante de sa section de passage et finit par provoquer le bouchage de cette dernière, ce qui nécessite l'arrêt de l'installation. Par ailleurs, l'écoulement descendant en couche mince du film de liquide le long des parois internes de la tubulure peut être ralenti par le flux gazeux ascendant, ce qui augmente davantage le temps de séjour du liquide sur les parois chaudes de la tubulure et aggrave le phénomène de cokage.

Le phénomène de cokage est donc favorisé par les échanges entre le flux gazeux ascendant et le flux liquide descendant, cet échange étant d'autant plus important que la surface d'échange est grande et que le temps de séjour du flux liquide dans la tubulure est long. Ce phénomène de cokage est ainsi également favorisé à la fois par un temps de contact prolongé entre le flux gazeux ascendant et le flux liquide descendant et par un temps de contact prolongé entre le flux liquide et la paroi interne de la tubulure, contact d'autant plus long que la vitesse du flux liquide descendant est lente.

Le cokage de cet organe de déversement (au niveau de la tubulure 7 ou de l'orifice 6) est un phénomène très génant car, non seulement il augmente régulièrement la perte de charge de cette zone d'overflash et il réduit la capacité hydraulique du plateau collecteur, mais il réduit également les durées de cycle d'une installation puisqu'il est nécessaire d'arrêter l'installation précocement afin d'enlever le coke par des moyens mécaniques.

Une augmentation de la vitesse du film s'écoulant sur les parois internes de la tubulure permettrait de limiter le phénomène de cokage, car le temps de séjour du liquide sur les parois chaudes de la tubulure serait réduit. Une solution afin d'augmenter cette vitesse consisterait à diminuer le diamètre de la tubulure. Toutefois, une telle diminution est contraire à l'évolution actuelle de la technique qui tend à augmenter le diamètre de la tubulure afin de retarder au maximum le bouchage de la tubulure dû à la formation de coke.

L'invention vise à pallier ces inconvénients en proposant un organe de déversement pourvu d'un dispositif de guidage unique permettant de supprimer ou réduire le problème de cokage, de sorte qu'il n'est plus nécessaire d'arrêter l'installation afin de déboucher l'organe de déversement.

Notamment, l'organe de déversement selon l'invention permet à la fois de limiter la surface d'échange et de réduire le temps de contact entre le flux liquide et le dispositif de guidage. Ceci a pour conséquence de limiter la surface d'échange et de réduire le temps de contact entre le flux liquide descendant et le flux gazeux ascendant.

On connaît déjà des organes de déversement pourvu de dispositifs de guidage. Ainsi, les documents US 6 053 484, US 6 390 454, US 6 076 813 décrivent des organes de déversement. De plus, le document US 5 535 989 décrit un organe de déversement destiné à une enceinte de traitement à écoulement diphasique, en particulier du type à contre-courant naturel, dans laquelle circulent un flux gazeux ascendant et un flux liquide descendant, formé d'un plateau sensiblement horizontal comprenant des ouvertures pour le passage du flux gazeux ascendant. Ce plateau est pourvu d'au moins un orifice de déversement du flux liquide descendant, cet orifice étant pourvu d'une pluralité de dispositifs de guidage situés sous le plateau et reliés à l'orifice de déversement de sorte que le liquide s'écoule en un film sur les dispositifs de guidage. Le liquide s'écoule ainsi en un film continu le long des dispositifs de guidage. Toutefois, un tel système, qualifié de "contacteur", est destiné à favoriser les échanges entre le flux liquide et le flux gazeux, en augmentant la surface de contact entre le flux liquide descendant et les parois des dispositifs de guidage. Il en résulte une augmentation du temps de contact entre les deux flux. Un tel système vise à multiplier les interactions liquide et gaz en développant l'interface flux liquide - paroi des dispositifs de guidage, ce qui favorise le cokage.

Au contraire l'organe de déversement selon l'invention permet de concentrer le flux liquide descendant en un endroit bien limité dans l'espace, et de réduire ainsi la surface d'échange entre les deux flux, ainsi que leur temps de contact.

L'organe de déversement selon l'invention est également avantageux lorsque le contact entre le film liquide descendant et la paroi de l'enceinte soulève tout problème d'incompatibilité entre ce liquide et le matériau de cette paroi, incompatibilité d'ordre thermique (craquage thermique du liquide contre une paroi chaude, solidification du liquide sur une paroi froide, etc...), mécanique (érosion du matériau par un liquide contenant des éléments solides abrasifs), ou tout problème de corrosion (métallurgie du matériau insuffisamment résistante au pouvoir corrosif du film liquide).

A cet effet, l'objet de l'invention est décrit dans la revendication 1.

Selon l'invention, le flux liquide s'écoule loin des parois de l'enceinte dans lequel il est destiné à être placé. Il ne circule plus sur les parois internes de la tubulure décrite précédemment, qui devient alors facultative, de sorte qu'il n'y pas de risque de bouchage par cokage de la tubulure ou de l'orifice de déversement. De plus, le fait de guider l'écoulement du flux liquide au moyen d'un unique dispositif de guidage, permet un écoulement continu à travers une section de passage réduite (l'orifice de déversement), donc à une vitesse d'écoulement plus élevée que lorsque l'écoulement s'écoule en couche mince sur la paroi de la tubulure, ou plus élevée que si le flux s'écoulait librement dans l'enceinte, ce qui peut améliorer également la qualité de l'interface liquide/gaz et limiter le phénomène de primage de gouttelettes de liquide par le flux gazeux ascendant (cas d'un écoulement diphasique à contre-courant anti-naturel dans lequel la phase gazeuse entraîne le liquide vers le haut). En augmentant la vitesse d'écoulement du flux liquide, on réduit ainsi le temps de contact entre le flux liquide et le flux gazeux, réduisant ainsi le cokage. Enfin, un tel guidage permet également de réduire la surface d'échange entre les deux flux, ce qui réduit lecokage.

Selon l'invention, le dispositif de guidage peut être constitué d'une chaîne, d'un tube, d'un ressort à spires non jointives, ou encore d'un tube encerclé d'un ressort à spires non jointives.

Dans une variante particulière, lorsque le dispositif est constitué d'un tube, éventuellement encerclé d'un ressort, l'intérieur du tube peut être pourvu d'un élément chauffant ou réfrigérant. Il s'agit par exemple d'une résistance chauffante ou d'une circulation de fluide caloporteur. Cet agencement permet de refroidir le flux liquide afin d'éviter les réactions indésirables, ou de le chauffer afin de rendre le flux liquide plus visqueux et d'accélérer ainsi son écoulement.

Dans encore une autre variante, le dispositif de guidage peut être entouré d'une tubulure de diamètre supérieur permettant d'isoler de l'enceinte le flux liquide s'écoulant le long du dispositif de guidage ou de contrôler les échanges thermiques entre le flux liquide et l'enceinte. Dans ce cas, le dispositif permet de retarder la formation de coke dans la tubulure, car le flux liquide reste à distance de la paroi chaude de la tubulure.

De préférence, le dispositif de guidage présente une section transversale suffisamment faible par rapport à la section de l'orifice de déversement ou de la tubulure qui entoure le dispositif de guidage, pour maintenir le flux de liquide s'écoulant le long du dispositif à distance des parois de l'enceinte ou de la tubulure.

Cette section est suffisamment faible pour limiter la surface de contact et d'échange entre les deux flux, ce qui réduit le cokage.

Avantageusement, le dispositif de guidage présente une section transversale comprise entre 1/5^{ème} et la moitié environ de la section transversale de l'orifice de déversement ou de la tubulure qui entoure le dispositif de guidage.

De préférence, le dispositif de guidage est réalisé en un matériau adapté aux caractéristiques du flux liquide.

L'invention concerne également une enceinte de traitement à écoulement diphasique du type à contre-courant naturel, caractérisée en ce qu'elle comporte au moins un organe de déversement selon l'invention.

Avantageusement, le dispositif de guidage s'étend suivant un axe sensiblement parallèle à l'axe vertical de l'enceinte. Le flux liquide s'écoule alors en couche mince sur la paroi externe du dispositif de guidage, sensiblement parallèlement à la paroi de l'enceinte et à distance sensiblement constante de celle-ci. Dans cette position, la quasi-totalité du flux liquide s'écoule par gravité sur les parois externes du dispositif de guidage.

Dans un mode de réalisation particulier, l'extrémité du dispositif de guidage opposée à l'orifice de déversement est fixée à l'enceinte. Cette fixation est mécanique et peut être située dans la zone inférieure de l'enceinte.

Plus particulièrement, l'enceinte selon l'invention est destinée au traitement d'un flux de liquide de type hydrocarboné ou de type aqueux.

Il s'agit par exemple du cas particulier d'une colonne de distillation atmosphérique, d'une colonne de distillation sous vide de pétrole brut, d'une colonne de fractionnement atmosphérique ou sous vide d'un viscoréducteur.

L'invention est maintenant décrite en référence aux dessins annexés, non limitatifs, dans lesquels :
- la figure 1 est une représentation conventionnelle d'une enceinte de traitement à écoulement diphasique du type à contre-courant naturel ;
- la figure 2 représente une colonne de distillation sous vide de viscoréducteur pourvu d'un organe de déversement selon l'invention.

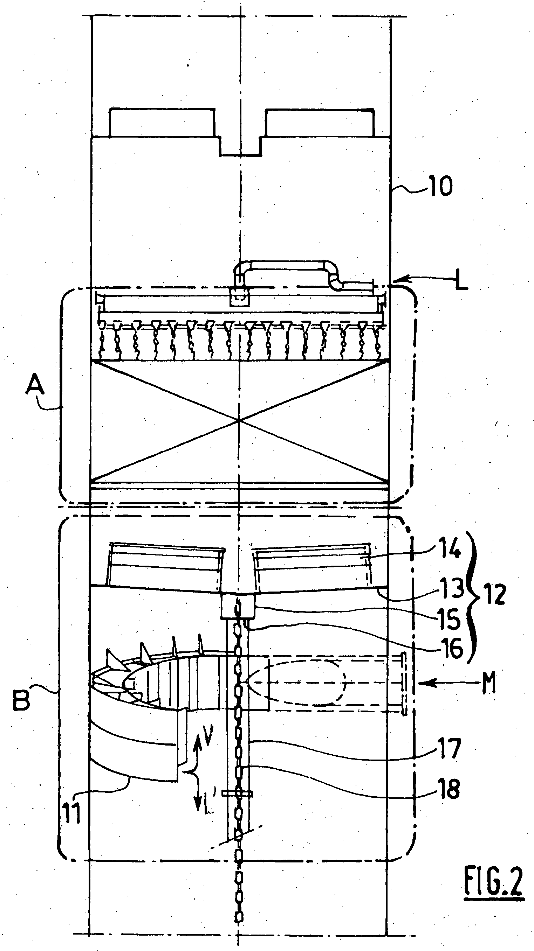

La colonne de distillation sous vide représentée figure 2 comprend une enceinte de traitement 10 à écoulement diphasique à contre-courant naturel, dans laquelle circulent un flux liquide L en mouvement dynamique descendant et un flux gazeux V ascendant. Cette enceinte 10 est destinée au traitement d'un flux de liquide de type hydrocarboné ou de type aqueux.

L'enceinte 10 présente une zone de lavage A située au dessus d'une zone d'overflash B. Un flux liquide descendant L est introduit au niveau de la zone de lavage A, tandis qu'un mélange diphasique gaz/liquide M est introduit au niveau de la zone d'overflash B au moyen d'un distributeur de charge 11. Le flux diphasique M se sépare alors en un flux gazeux V ascendant et en un flux liquide L' s'écoulant par gravité vers la zone inférieure de l'enceinte.

Cette enceinte 10 comporte un organe de déversement 12 selon l'invention, formé d'un plateau collecteur 13 sensiblement horizontal comprenant des ouvertures 14 pour le passage du flux gazeux V ascendant, et une goulotte de récupération 15 du flux liquide L descendant. Dans l'exemple représenté, les ouvertures 14 se présentent sous la forme de cheminées.

La goulotte 15 débouche sur un orifice de déversement 16 auquel est reliée une unique tubulure 17 sensiblement verticale. Cette tubulure 17 est par exemple semblable aux tubulures utilisées habituellement, et solidarisée au niveau de l'orifice de déversement.

L'organe de déversement 12 selon l'invention comprend un dispositif de guidage 18 unique s'étendant sous le plateau suivant l'axe d'écoulement du flux liquide, à l'intérieur de la tubulure 17. L'axe d'écoulement du flux liquide L coïncide ainsi avec l'axe de la tubulure 17 et est parallèle à l'axe vertical de l'enceinte 10.

Ce dispositif de guidage 18 est relié à l'orifice de déversement 16 par tout moyen mécanique amovible ou solidaire, de manière à ce que le flux liquide L s'écoule sur sa paroi externe. Dans l'exemple représenté, le dispositif de guidage étant parallèle à l'axe de l'enceinte, le flux liquide s'écoule sur les parois externes du dispositif parallèlement à la paroi de l'enceinte. Le flux liquide s'écoule ainsi sur le dispositif de guidage à distance constante de la paroi de la tubulure 17 (ou de l'enceinte lorsque la tubulure 17 est supprimée).

Le dispositif de guidage 18 peut être fixé soit au centre de l'orifice de déversement 16 par des moyens appropriés, soit sur un bord de cet orifice, de préférence du côté où se déverse préférentiellement le flux liquide provenant de la goulotte 15.

Lorsque le dispositif de guidage est fixé au centre de l'orifice 16, la tubulure 17 peut présenter le même diamètre que l'orifice de déversement 16. En raison de sa vitesse, le liquide provenant de la goulotte 15 tombe alors au centre de la tubulure, sur le dispositif de guidage.

Lorsque le dispositif de guidage est fixé sur un bord de l'orifice de déversement, la tubulure 17 présente de préférence un diamètre supérieur à celui de l'orifice de déversement 16, de manière à ce que le liquide s'écoule le long de la chaîne et non sur les parois internes de la tubulure.

Dans cet exemple, le dispositif de guidage est une chaîne 18, dont la section transversale est suffisamment faible par rapport à la section de la tubulure 17 pour maintenir le flux de liquide s'écoulant le long du dispositif à distance des parois internes de la tubulure.

Cette section transversale est de préférence comprise entre 1/5^{ème} et la moitié environ de la section transversale de la tubulure 17 ou de l'orifice de déversement 16.

Selon le ratio existant entre la section de la tubulure où de l'orifice de déversement et la section de l'enceinte, la section transversale du dispositif de guidage peut être comprise entre environ 1/10^{ème} et environ 1/20^{ème} de la section transversale de l'enceinte.

La chaîne 18 est réalisée en un matériau adapté aux caractéristiques du flux liquide.

Afin d'éviter que la chaîne ne touche les parois de la tubulure 17, sous l'effet des turbulences liées à l'hydrodynamique des flux de liquide et de gaz, ce qui pourrait être le cas si la chaîne n'était pas assez pesante, on peut prévoir de fixer l'extrémité inférieure de la chaîne (distante de l'organe de déversement) à l'enceinte 10.

De même, si la tubulure 17 n'est pas montée de façon rigoureusement verticale, la chaîne pourra être fixée par son extrémité inférieure afin d'éviter qu'elle ne rencontre la paroi de la tubulure. Selon l'inclinaison de la chaîne et la nature du flux liquide, une partie du flux liquide peut se décoller de la chaîne et tomber par gravité, l'autre partie s'écoulant en couche mince le long de la chaîne.

Dans une variante non représentée, la chaîne peut être remplacée par un tube dont la section peut être quelconque (carrée, ronde, triangulaire, elliptique, hélicoïdale, etc...). L'extrémité supérieure du tube est de préférence fermée afin que le flux liquide ne puisse s'écouler que sur la paroi externe du tube. L'intérieur de ce tube peut en outre être pourvu d'un élément chauffant ou réfrigérant.

Le dispositif de guidage peut également être constitué d'un ressort à spires non jointives ou d'un tube encerclé d'un ressort à spires non jointives.

Dans une autre variante non représentée, la tubulure 17 reliée au plateau et à l'intérieur de laquelle est placé le dispositif de guidage, est supprimée.

Les différentes variantes décrites ci-dessus peuvent être combinées entre elles.

## Revendications

1. Enceinte de traitement (10) pour le fractionnement d'hydrocarbures, à écoulement diphasique du type à contre-courant naturel, dans laquelle circule un flux gazeux ascendant et un flux liquide descendant, l'enceinte comprenant au moins un organe de déversement (12) formé d'un plateau (13) sensiblement horizontal comprenant des ouvertures (14) pour le passage du flux gazeux ascendant, et une goulotte de récupération (15) du flux liquide descendant, la goulotte (15) débouchant sur un orifice de déversement (16), **caractérisée en ce que** l'organe de déversement comprend un unique dispositif de guidage (18) s'étendant sous le plateau (13), le dispositif de guidage étant relié à l'orifice de déversement (16) de manière à ce qu'au moins une partie du flux liquide s'écoule sur sa paroi externe, le dispositif de guidage étant constitué d'une chaîne, d'un tube, d'un ressort à spires non jointives, ou d'un tube encerclé d'un ressort à spires non jointives.

2. Enceinte de traitement (10) selon la revendication 1, **caractérisée en ce que**, le dispositif de guidage étant constitué d'un tube ou d'un tube encerclé d'un ressort à spires non jointives, l'intérieur du tube est pourvu d'un élément chauffant ou réfrigérant.

3. Enceinte de traitement (10) selon l'une des revendications 1 ou 2, **caractérisée en ce que** le dispositif de guidage est entouré d'une tubulure (17). '

4. Enceinte de traitement (10) selon l'une des revendications 1 à 3, **caractérisée en ce que** le dispositif de guidage présente une section transversale suffisamment faible par rapport à la section de l'orifice de déversement (16) ou de la tubulure (17) qui l'entoure pour maintenir le flux de liquide s'écoulant le long du dispositif à distance des parois de l'enceinte ou de la tubulure.

5. Enceinte de traitement (10) selon la revendication 4, **caractérisée en ce que** le dispositif de guidage présente une section transversale comprise entre 1/5^{ème} et la moitié environ de la section transversale de l'orifice de déversement (16) ou de la tubulure (17) qui l'entoure.

6. Enceinte de traitement (10) selon l'une des revendications 1 à 5, **caractérisée en ce que** le dispositif de guidage est réalisé en un matériau adapté aux caractéristiques du flux liquide.

7. Enceinte de traitement (10) selon l'une des revendications 1 à 6 , **caractérisée en ce que** le dispositif de guidage s'étend sensiblement parallèlement à l'axe vertical de l'enceinte.

8. Enceinte de traitement (10) selon l'une des revendications 1 à 7, **caractérisée en ce que** l'extrémité du dispositif de guidage opposée à l'orifice de déversement (16) est fixée à l'enceinte.

9. Utilisation d'une enceinte de traitement selon l'une des revendications 1 à 8, pour le traitement d'un flux de liquide de type hydrocarboné.

10. Utilisation d'une enceinte de traitement selon l'une des revendications 1 à 9, en tant que colonne de distillation atmosphérique ou sous vide de pétrole brut, colonne de distillation sous vide, colonne de fractionnement atmosphérique ou sous vide de viscoréducteur.

## Patentansprüche

1. Behandlungskammer (10) für die Fraktionierung von Kohlenstoffen, mit Zweiphasenströmung von der Art mit natürlichem Gegenstrom, in der ein aufsteigender Gasstrom und ein absteigender Flüssigkeitsstrom zirkulieren, wobei die Kammer mindestens eine Überlaufvorrichtung (12) umfasst, die von einer im Wesentlichen horizontalen Platte (13) gebildet wird, die Öffnungen (14) für den Durchfluss des aufsteigenden Gasstroms umfasst, und eine Auffangrinne (15) für den absteigenden Flüssigkeitsstrom, wobei die Rinne (15) in eine Überlauföffnung (16) mündet, **dadurch gekennzeichnet, dass** die Überlaufvorrichtung eine einzelne Gleitvorrichtung (18) umfasst, die sich unter der Platte (13) erstreckt, wobei die Leitvorrichtung mit der Überlauföffnung (16) so verbunden ist, dass mindestens ein Teil des Flüssigkeitsstroms auf ihrer Außenwand abfließt, wobei die Leitvorrichtung von einer Kette, einem Rohr, einer Feder mit nicht aneinander liegenden Windungen oder einem Rohr, das von einer Feder mit nicht aneinander liegenden Windungen ummantelt ist, gebildet wird.

2. Behandlungskammer (10) nach Anspruch 1, **dadurch gekennzeichnet, dass**, wenn die Leitvorrichtung von einem Rohr oder einem Rohr, das von einer Feder mit nicht aneinander liegenden Windungen ummantelt ist, gebildet wird, das Innere des Rohrs mit einem Heiz- oder Kühlelement ausgestattet ist.

3. Behandlungskammer (10) nach Anspruch 1 oder 2, **dadurch gekennzeichnet, dass** die Leitvorrichtung von einem Rohrstutzen (17) umgeben ist.

4. Behandlungskammer (10) nach einem der Ansprüche 1 bis 3, **dadurch gekennzeichnet, dass** die Leitvorrichtung einen Querschnitt aufweist, der in Bezug auf den Querschnitt der Überlauföffnung (16) oder des Rohrstutzens (17), der sie umgibt, klein genug ist, um den Flüssigkeitsstrom, der entlang der Vorrichtung abfließt, von den Wänden der Kammer oder des Rohrstutzens beabstandet zu halten.

5. Behandlungskammer (10) nach Anspruch 4, **dadurch gekennzeichnet, dass** die Leitvorrichtung einen Querschnitt aufweist, der zwischen 1/5 und der Hälfte etwa des Querschnitts der Überlauföffnung (16) oder des Rohrstutzens (17), der sie umgibt, beträgt.

6. Behandlungskammer (10) nach einem der Ansprüche 1 bis 5, **dadurch gekennzeichnet, dass** die Leitvorrichtung aus einem Material hergestellt ist, das an die Eigenschaften des Flüssigkeitsstroms angepasst ist.

7. Behandlungskammer (10) nach einem der Ansprüche 1 bis 6, **dadurch gekennzeichnet, dass** sich die Leitvorrichtung im Wesentlichen parallel zur vertikalen Achse der Kammer erstreckt.

8. Behandlungskammer (10) nach einem der Ansprüche 1 bis 7, **dadurch gekennzeichnet, dass** das Ende der Leitvorrichtung, das der Überlauföffnung (16) gegenüberliegt, an der Kammer befestigt ist.

9. Verwendung einer Behandlungskammer nach einem der Ansprüche 1 bis 8, für die Behandlung eines Flüssigkeitsstroms von der Art mit Kohlenwasserstoffen.

10. Verwendung einer Behandlungskammer nach einem der Ansprüche 1 bis 9, als Kolonne zur atmosphärischen Destillation oder Vakuumdestillation von Erdöl, Kolonne zur Vakuumdestillation, Kolonne zur atmosphärischen Fraktionierung oder Vakuumfraktionierung einer Visbreaking-Anlage.

## Claims

1. Two-phase flow processing enclosure (10) for fractionating hydrocarbons, of the natural counter-flow type, in which an ascending gaseous flow and a descending liquid flow circulate, the enclosure comprising at least one flow device (12) formed by an appreciably horizontal tray (13) having openings (14) for the passage of the ascending gaseous flow, and a channel (15) for recovering the descending liquid flow, the channel (15) discharging into a flow orifice (16), **characterized in that** the flow device comprises a single guide device (18) extending beneath the tray (13), the guide device being connected to the flow orifice (16) in such a way that at least part of the liquid flows on its outer wall, the guide device being composed of a chain, a tube, a spring with non-contiguous turns, or a tube surrounded by a spring with non-contiguous turns.

2. Processing enclosure (10) according to Claim 1, **characterized in that**, the guide device being composed of a tube or a tube surrounded by a spring with non-contiguous turns, the interior of the tube is equipped with a heating or cooling element.

3. Processing enclosure (10) according to one of Claims 1 or 2, **characterized in that** the guide device is surrounded by a tubular member (17).

4. Processing enclosure (10) according to one of Claims 1 to 3, **characterized in that** the guide device has a transverse cross section small enough compared to the cross section of the flow orifice (16) or of the tubular member (17) that surrounds it to keep the liquid flowing along the device at a distance from the walls of the enclosure or the tubular member.

5. Processing enclosure (10) according to Claim 4, **characterized in that** the guide device has a transverse cross section of between 1/5th and about one half of the transverse cross section of the flow orifice (16) or of the tubular member (17) that surrounds it.

6. Processing enclosure (10) according to one of Claims 1 to 5, **characterized in that** the guide device is made of a material suitable for the characteristics of the liquid flow.

7. Processing enclosure (10) according to one of claims 1 to 6, **characterized in that** the guide device extends appreciably parallel to the vertical axis of the enclosure.

8. Processing enclosure (10) according to one of claims 1 to 7, **characterized in that** the end of the guide device opposite to the flow orifice (16) is attached to the enclosure.

9. Use of a processing enclosure according to one of Claims 1 to 8, for the processing of a hydrocarbonated type liquid flow.

10. Use of a processing enclosure according to one of Claims 1 to 9, as a crude oil atmospheric or vacuum distillation column, vacuum distillation column, visbreaker atmospheric or vacuum fractionation column.
